# EUROPEAN PATENT SPECIFICATION

(11) **EP 3 561 898 B1**
(45) Date of publication and mention of the grant of the patent: **01.04.2026**
(21) Application number: 17885243.0
(22) Date of filing: 20.12.2017
(51) Int. Cl.: H01M 50/124, H01M 50/105, H01M 50/117, H01M 50/119, H01M 50/186

(54) **POUCH-TYPE SECONDARY BATTERY AND FABRICATING METHOD THEREFOR**
BEUTELARTIGE SEKUNDÄRBATTERIE UND HERSTELLUNGSVERFAHREN DAFÜR
BATTERIE SECONDAIRE DE TYPE À POCHE ET SON PROCÉDÉ DE FABRICATION

(30) Priority: 20.12.2016 KR 20160174846
(43) Date of publication of application: 30.10.2019
(60) Divisional application: 26160465.6
(73) Proprietor: SK On Co., Ltd., Seoul 03161 (KR)
(72) Inventor: KIM, Tae Il, Daejeon 34124 (KR); KIM, Dong Ju, Daejeon 34124 (KR); KIM, Sung Yeop, Daejeon 34124 (KR); KIM, Jin Go, Daejeon 34124 (KR); LEE, Seung Noh, Daejeon 34124 (KR)
(74) Representative: Stolmár & Partner Patentanwälte PartG mbB
(86) International application number: PCT/KR2017/015154
(87) International publication number: WO 2018/117654

(56) References cited:
- EP-A1- 3 382 771
- JP-A- 2004 071 301
- KR-A- 20060 037 827
- KR-A- 20150 061 990
- KR-B1- 100 895 202
- KR-B1- 100 998 845
- US-A1- 2009 311 592

## Description

### [Technical Field]

The present invention relates to a pouch type secondary battery and a method of fabricating the same.

### [Background Art]

As low-carbon green growth is emerging as a global issue around the world, the green energy industry is receiving great attention. Recently, development of electric vehicles or energy storage devices for storing renewable energy have been attracting great attention in dealing with the depletion of fossil fuels and reducing carbon dioxide.

Since an electric vehicle is driven by using electric energy as a main power source from a battery, without an engine, an electric vehicle does not generate exhaust gas. Further, since the vehicle is driven by using only electric energy from a battery, energy density of the battery should be high compared to a volume occupied by the battery and a weight of the battery. Accordingly, it has been necessary to develop a technique for generating high energy density in secondary batteries of an electric vehicle. Lately, there is a strong demand for extending the lifespan of such secondary batteries, and there is an increasing need for a technique for maintaining performance of secondary batteries even when the secondary batteries are exposed to high temperatures for a long time.

A typical pouch type secondary battery may be formed by wrapping an electrode assembly with a casing material. Here, a sealing portion is formed by sealing an outermost portion of the casing material in which an electrode assembly is accommodated. However, when a secondary battery module is assembled in a state in which the sealing portion protrudes, a total volume of the secondary battery module is increased due to the sealing portion, such that energy density of the secondary battery module may be lowered. Examples of a pouch-type secondary battery are disclosed in US 2009/311592 A1, EP 3 382 771 A1 and KR 10 1520153 B1.

### [Disclosure]

### [Technical Problem]

Embodiments of the present invention provide a pouch type secondary battery module capable of improving density of a secondary battery module by forming a sealing portion of the pouch type secondary battery module to be smaller and a method of fabricating the same.

Embodiments of the present invention provide a pouch type secondary battery module which reduces an increase in volume of a sealing portion formed by attaching a casing material to a secondary battery module and a method of fabricating the same.

Embodiments of the present invention provide a pouch type secondary battery module which improves cooling efficiency and a method of fabricating the same.

### [Technical Solution]

One aspect of the present invention provides a pouch type secondary battery including a casing material configured to accommodate an electrode assembly from which electrode tabs are led; and the casing material includes a sealing portion formed on three of four sides of the pouch type secondary battery and includes a close contact portion formed on the one remaining side of the pouch type secondary battery; wherein the sealing portion includes an extending portion protruding perpendicularly with respect to the close contact portion at a portion adjacent to the close contact portion,
wherein a concave portion is formed in a longitudinal direction of the close contact portion,
wherein the casing material, before accommodating the electrode assembly, is provided with a plurality of accommodation spaces configured to accommodate the electrode assembly and a rounded portion having an upwardly convex shape located at a gap between the plurality of accommodation spaces, and the concave portion is at least a part of the rounded portion, and
wherein the concave portion corresponds to a center of the rounded portion and is formed in the close contact portion while the rounded portion having the convex shape is brought into close contact with one side surface of the electrode assembly and is spread along the one side surface of the electrode assembly.

The casing material may include aluminum or an aluminum alloy.

Another aspect of the present invention provides a method of fabricating a pouch type secondary battery, the method including: providing an electrode assembly at which electrode tabs are connected; forming a casing material on which a rounded portion of an upwardly convex shape is formed at a gap between a plurality of accommodation spaces configured to accommodate an electrode assembly; accommodating the electrode assembly in one of the plurality of accommodation spaces of the casing material so that the electrode tabs are led to an outside; forming a close contact portion, which is brought into close contact with at least one side surface of side surfaces of the electrode assembly, on the casing material in a state in which the electrode assembly is accommodated in the accommodation space; forming a sealing portion by bonding the casing material at portions other than the close contact portion; wherein an extending portion is formed in the sealing portion at a portion adjacent to the close contact portion (153), the extending portion protruding perpendicularly with respect to the close contact portion by a predetermined length,
wherein the rounded portion is spread along at least one side surface of the side surfaces of the electrode assembly when one remaining accommodation space of the plurality of accommodation spaces covers the electrode assembly, and
wherein the rounded portion is spread and the close contact portion which is brought into close contact with the electrode assembly is formed.

A press in which a plurality of accommodation spaces and a rounded part of an upwardly convex shape formed at a gap between the accommodation spaces are formed may be used to form a shape of the casing material, and the casing material may be provided in a sheet form and may be pressed to the side in which the press is located.

The casing material may include aluminum or an aluminum alloy.

### [Advantageous Effects]

Embodiments of the present invention provide a pouch type secondary battery module capable of improving density of a secondary battery module by forming a sealing portion of the pouch type secondary battery module to be reduced and a fabricating method.

Embodiments of the present invention provide a pouch type secondary battery module which reduces an increase in volume of a sealing portion which is formed by closely attaching a casing material to a secondary battery module and a fabricating method.

Embodiments of the present invention provide a pouch type secondary battery module in which a cooling plate configured to cool a secondary battery module can be arranged not only in an arrangement direction side in which the secondary battery module is arranged but also in a direction perpendicular to the arrangement direction, thereby improving cooling efficiency, and a fabricating method.

### [Description of Drawings]

FIG. 1 is a perspective view of a pouch type secondary battery module according to an embodiment of the present invention.
FIG. 2 is a plan view of the pouch type secondary battery module according to an embodiment of the present invention.
FIG. 3 is a view showing a casing material and a press which are not according to an embodiment of the present invention.
FIG. 4A is a view showing a state in which an electrode assembly is arranged in an accommodation space of a casing material according to an embodiment of the present invention.
FIG. 4B is a view showing a state in which the casing material according to an embodiment of the present invention is bonded along an outer periphery of the electrode assembly.

### [Modes of the Invention]

Hereinafter, specific embodiments of the present invention will be described with reference to the drawings. However, this is an exemplary embodiment only and the present invention is not limited thereto but defined by the appended claims.

In descriptions of the invention, when it is determined that detailed descriptions of related well-known functions unnecessarily obscure the gist of the invention, detailed descriptions thereof will be omitted. Some terms described below are defined by considering functions in the invention and meanings may vary depending on, for example, a user or operator's intentions or customs. Therefore, the meanings of terms should be interpreted based on the scope throughout this specification.

The scope of the invention is defined by the appended claims. The following embodiments are only made to efficiently describe the progressive technological scope of the invention to those skilled in the art.

A secondary battery used in various electric devices such as an electric vehicle may be, for example, a pouch type battery of a lithium ion battery or of a lithium polymer battery, and hereinafter, they will all be referred to as secondary batteries.

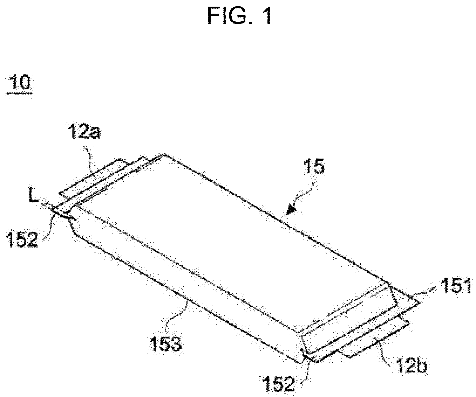

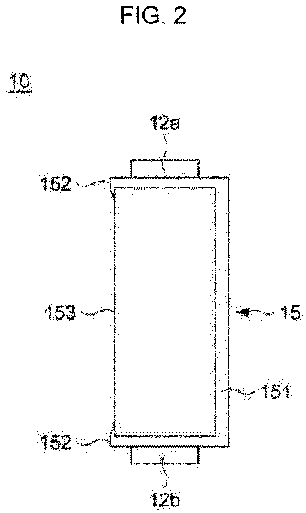

FIG. 1 is a perspective view of a pouch type secondary battery 10 according to an embodiment of the present invention. FIG. 2 is a plan view of the pouch type secondary battery 10 according to an embodiment of the present invention.

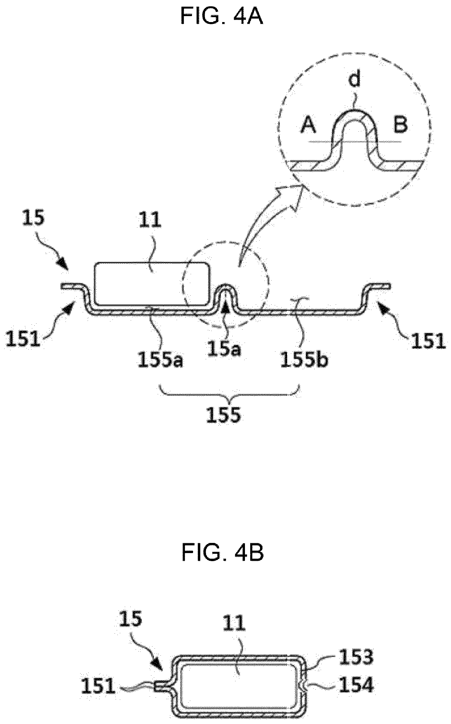

Referring to FIGS. 1 and 2, the pouch type secondary battery 10 includes a casing material 15 configured to accommodate an electrode assembly (11 in FIG. 4) from which electrode tabs 12a and 12b are led, and the casing material 15 includes a close contact portion 153 which is brought into close contact with the electrode assembly 11 at at least one side surface of side surfaces of the electrode assembly 11 and a sealing portion 151 which is formed by bonding the casing material 15 at portions other than the close contact portion 153. The sealing portion 151 includes extending portions 152 protruding perpendicularly with respect to the close contact portion 153 by a predetermined length L at a portion adjacent to the close contact portion 153 in the sealing portion 151.

The secondary battery 10 may include the electrode assembly 11, and a positive electrode tab 12a and a negative electrode tab 12b which protrude from the electrode assembly 11 to the outside of the casing material 15. The electrode assembly 11 may be of a jelly-roll form wounded in a spiral form with a roll-shaped separator interposed between a positive electrode plate and a negative electrode plate. However, the electrode assembly 11 is not limited thereto, and may have a stacked shape in which a positive electrode plate, a separator, and a negative electrode plate are sequentially stacked. The positive electrode tab 12a and the negative electrode tab 12b may be electrically connected to a positive electrode plate and a negative electrode plate, respectively, and may protrude from both ends of the electrode assembly 11. However, the present invention is not limited thereto, and the positive electrode tab 12a and the negative electrode tab 12b may protrude from one end of the electrode assembly 11 and be spaced apart from each other. In an embodiment of the present invention, a case in which electrode tabs 12 protrude from both ends of the electrode assembly 11 will be described.

The casing material 15 accommodates the electrode assembly 11 from which the electrode tabs 12a and 12b are led. The casing material 15 may include aluminum. The use of aluminum for the casing material 15 may be for miniaturization, weight reduction, thinning, and resistance to severe thermal environments and mechanical impacts. A plurality of accommodation spaces 155a (see FIG. 4A) may be formed in the casing material 15 in a recessed shape, and the electrode assembly 11 may be disposed in the accommodation space 155a. The casing material 15 may be bonded along an outer periphery of the electrode assembly 11 after the electrode assembly 11 is disposed.

The sealing portion 151 may be formed by bonding the casing material 15 along the outer periphery of the electrode assembly 11. The sealing portion 151 is formed by bonding the casing material 15 and may be formed along four sides around the side surface of the casing material 15. Here, the electrode tabs 12a and 12b may be led to the outside of the sealing portion 151 at both ends of the electrode assembly 11. For example, the electrode tabs 12a and 12b may be led from both ends of the electrode assembly 11 in a longitudinal direction (i.e., the vertical direction in FIG. 2) of the electrode assembly 11. However, the present invention is not limited thereto, and when the electrode tabs 12a and 12b are led from one end of the electrode assembly 11 and are spaced apart from each other, the electrode tabs 12a and 12b may be led from one end of the electrode assembly 11 to the outside of the sealing portion 151.

Here, a volume of the secondary battery module may be increased by as much as a length by which the sealing portion 151 is formed. Accordingly, in the pouch type secondary battery 10 according to an embodiment of the present invention, the casing material 15 is not formed along four sides forming the side surface of the electrode assembly 11 but is formed to be in close contact with the electrode assembly 11 on at least one of four sides forming the side surface of the electrode assembly 11, thereby reducing the volume of the secondary battery module.

The casing material 15 is brought into close contact with at least one side surface of the side surfaces of the electrode assembly 11. Here, a portion of the casing material 15 which is brought into close contact with the electrode assembly 11 will be described as the close contact portion 153. The close contact portion 153 is formed in close contact with the electrode assembly 11. Accordingly, an excess portion of the sealing portion 151 is reduced when a secondary battery module is assembled, such that a space that may be formed between adjacent secondary batteries may be reduced. That is, adjacent secondary batteries may be in close contact with each other without creating a space therebetween because the casing material 15 is formed to be in close contact with one surface of the side surfaces of the electrode assembly 11, and the one surface is the surface in which the electrode tabs 12a and 12b are not formed. Accordingly, when assembling the secondary battery 10, the volumetric efficiency thereof may be increased.

The sealing portion 151 according to an embodiment of the present invention includes at least one extending portion 152 protruding by a predetermined length at a position adjacent to the electrode tabs 12a and 12b.

According to the invention, the extending portion 152 protrudes perpendicularly with respect to the close contact portion 153 by a predetermined length L at a portion adjacent to the close contact portion 153. Here, the extending portion 152 may have a length of less than a few millimeters (mm). Two extending portions 152 may protrude in the same direction, or may protrude in a perpendicular direction with respect to a direction in which the electrode tab 12 protrudes. Further, a position at which the extending portion 152 protrudes may be at least one side of the electrode assembly 11 in which the electrode tabs 12a and 12b are not formed.

Furthermore, cooling efficiency of the secondary battery 10 may be improved by forming the close contact portion 153 on one surface of the secondary battery 10. That is, the close contact portion 153 may be in contact with a cooling plate (not shown) or the like capable of cooling the secondary battery 10. For example, the plurality of secondary batteries 10 may be stacked in parallel so that the close contact portion 153 of each of the plurality of secondary batteries 10 is positioned downward, and a cooling plate capable of cooling the secondary battery 10 may be disposed on lower sides of the plurality of the secondary batteries 10 to be in contact with the close contact portion 153 of each of the plurality of secondary batteries 10.

Further, since the cooling plate, which has a flat shape, is brought into close contact with the close contact portion 153 and the extending portions 152 located at both ends of the close contact portion 153 extend in a vertical direction from the close contact portion 153, the extending portions 152 can serve to maintain arrangement of the secondary battery 10 with respect to the cooling plate. For example, grooves capable of accommodating the extending portions 152 are formed in the cooling plate at predetermined intervals (intervals in which the secondary battery 10 are arranged), and the extending portions 152 are accommodated in the grooves, and thus the plurality of secondary batteries 10 may be maintained on the cooling plate.

Further, a concave portion (154 in FIG. 4) is formed in a longitudinal direction at an intermediate position of the close contact portion 153. The electrode assembly 11 and the casing material 15 are in close contact with each other at the concave portion 154 more than at other portions of the close contact portion 153, and thus, heat transfer between the electrode assembly 11 and the casing material 15 may be more efficient. Accordingly, formation of the concave portion 154 may be more effective for cooling the pouch type secondary battery 10.

Further, a method of fabricating the pouch type secondary battery 10 according to an embodiment of the present invention will be described.

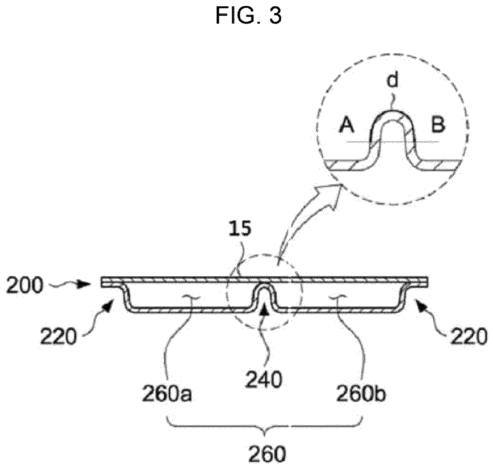

FIG. 3 is a view showing a casing material 15 and a press frame 200 which are not according to an embodiment of the present invention.

As shown in FIG. 3, the casing material 15 may be pressed by the press frame 200 to form a shape thereof.

The press frame 200 may include a plurality of accommodation spaces 260 including a first accommodation space 260a and a second accommodation space 260b and a rounded part 240 formed at a gap between the first accommodation space 260a and the second accommodation space 260b. Further, the press frame 200 may include sealing parts 220 to form a sealing portion 151 of the casing material 15.

The accommodation space 260 is a space configured to accommodate an electrode assembly 11, and may have a recessed shape. Although the press frame 200 according to an embodiment of the present invention is formed with two accommodation spaces 260a and 260b in accordance with a shape of the casing material 15, the present invention is not limited thereto. That is, in various embodiments of the present invention, the accommodation space may be formed in an appropriate number corresponding to the shape of the casing material 15.

The rounded part 240 may be formed at an interval between the respective accommodation spaces 260a and 260b. The rounded part 240 may be formed to protrude convexly in a direction opposite to a recessed direction of the accommodation space 260. The rounded part 240 may have a convex curved shape. For example, a cross section of the rounded part 240 may be semicircular.

As described above, although the shape of the rounded part 240 is not limited, a circumference of the cross section of the rounded part 240 may be a semicircular circumference d from side A to B shown in FIG. 5 when the cross section of the rounded part 240 is semicircular. Here, side A means an adjacent side of a first accommodation space 260a, and side B means an adjacent side of a second accommodation space 260b. An uppermost portion of the rounded part 240 may be located at the same height as the sealing parts 220 or at a height at which it is adjacent to the sealing parts 220.

In addition, the rounded part 240 may prevent the casing material 15 from being broken during a process of pressing the casing material 15. This is because the rounded part 240 has an upwardly convex shape such that a concentration of stress received by the rounded part 240 may be minimized by the shape of the rounded part 240. Accordingly, it is possible to prevent the casing material 15 from being broken.

The casing material 15 may be provided in a form of a sheet including aluminum or an aluminum alloy and may be pressed to a side in which the press frame 200 is located. Accordingly, the casing material 15 may be pressed into a shape of the press frame 200.

FIG. 4A is a view showing a state in which the electrode assembly 11 is arranged in accommodation spaces 155 of the casing material 15 according to an embodiment of the present invention. FIG. 4B is a view showing a state in which the casing material 15 according to an embodiment of the present invention is bonded along an outer periphery of the electrode assembly 11.

Referring to FIGS. 4A and 4B, the electrode assembly 11 may be accommodated in the accommodation space 155 of the casing material 15 when the casing material 15 is pressed by the press frame 200,

In the following description, in the accommodation spaces 155 of the casing material 15, a space in which the electrode assembly 11 is disposed is defined as a first accommodation space 155a and a space in which the electrode assembly 11 is not disposed is referred to as a second accommodation space 155b.

A shape of the casing material 15 is formed and the electrode assembly 11 may be disposed in the first accommodation space 155a of the casing material 15.

When the electrode assembly 11 is disposed, a rounded portion 15a is spread along at least one side surface of the side surfaces of the electrode assembly 11.

The rounded portion 15a has an upwardly convex curved shape. For example, a cross section of the rounded portion 15a may be semicircular. Accordingly, the rounded portion 15a, which has a convex shape, is spread along one side surface of the electrode assembly 11.

Here, a surface with which the rounded portion 15a is closely contacted is a surface on which electrode tabs 12a and 12b are not formed. That is, an close contact portion 153 that is brought into close contact with the electrode assembly 11 is formed as the rounded portion 15a is spread.

As described above, a concave portion 154 corresponding to a center of the rounded portion 15a is formed in the close contact portion 153 while the rounded portion 15a having the convex shape is brought into close contact with one side surface of the electrode assembly 11. Further, although the shape of the rounded portion 15a is not limited, a length of the circumference of the rounded portion 15a in a vertical cross section with respect to the rounded portion 15a may be a circumference d of a semicircle when the cross section of the rounded portion 15a is semicircular. That is, a circumference of the rounded portion 15a may be a semicircular circumference d from side A to B shown in FIG. 4A. Here, side A means an adjacent side of the first accommodation space 155a, and side B means an adjacent side of the second accommodation space 155b. Accordingly, the rounded portion 15a may be a portion formed by a curved surface from A to B. Portions other than a portion to be the close contact portion 153 may be a part of the extending portion 152 in the rounded portion 15a of the casing material 15. Since the shape of the rounded portion 15a corresponds to the curved surface, a portion (a portion adjacent to the close contact portion 153 in the extending portion 152) that is not in close contact with the electrode assembly 11 may slightly protrude when the casing material 15 is folded as shown in FIG. 4B.

The second accommodation space 155b may cover the upper side of the electrode assembly 11 when the rounded portion 15a is brought into close contact with the electrode assembly 11.

Accordingly, the electrode assembly 11 is accommodated and sealed in the casing material 20 so that the pouch type secondary battery 10 is formed.

While the present invention has been described above in detail with reference to representative embodiments, it may be understood by those skilled in the art that the embodiment may be variously modified without departing from the scope of the present invention, which is defined by the appended claims.

### [Description of Reference Numerals]

10: POUCH TYPE SECONDARY BATTERY
11: ELECTRODE ASSEMBLY
12: ELECTRODE TAB
15: CASING MATERIAL
15A: ROUNDED PORTION
151: SEALING PORTION
152: EXTENDING PORTION
153: CLOSE CONTACT PORTION
154: CONCAVE PORTION
155: ACCOMMODATION SPACE

## Claims

1. A pouch type secondary battery (10) comprising:
a casing material (15) configured to accommodate an electrode assembly(11) from which electrode tabs (12a, 12b) are led,
wherein the casing material (15) includes a sealing portion (151) formed on three of four sides of the pouch type secondary battery (10), and a close contact portion (153) formed on one remaining side of the pouch type secondary battery (10),
wherein the sealing portion (151) includes an extending portion (152) protruding perpendicularly with respect to the close contact portion (153) at a portion adjacent to the close contact portion (153),
wherein a concave portion (154) is formed in a longitudinal direction of the close contact portion (153),
wherein the casing material (15), before accommodating the electrode assembly (11), is provided with a plurality of accommodation spaces (155a, 155b) configured to accommodate the electrode assembly (11) and a rounded portion (15a) having an upwardly convex shape located at a gap between the plurality of accommodation spaces (155a, 155b), and the concave portion (154) is at least a part of the rounded portion (15a),
wherein the concave portion (154) corresponds to a center of the rounded portion (15a) and is formed in the close contact portion (153) while the rounded portion (15a) having the convex shape is brought into close contact with one side surface of the electrode assembly (11) and is spread along the one side surface of the electrode assembly (11).

2. The pouch type secondary battery (10) of claim 1, wherein the casing material (15) includes aluminum or an aluminum alloy.

3. A method of fabricating a pouch type secondary battery (10) according to claim 1, the method comprising:
providing an electrode assembly (11) connected to electrode tabs (12a, 12b);
forming a casing material (15) on which a rounded portion (15a) of an upwardly convex shape is formed at a gap between a plurality of accommodation spaces (155a, 155b) configured to accommodate the electrode assembly (11);
accommodating the electrode assembly in one of the plurality of accommodation spaces (155a, 155b) of the casing material (15) so that the electrode tabs (12a, 12b) are led to an outside;
forming a close contact portion (153), which is brought into close contact with at least one side surface of side surfaces of the electrode assembly (11), on the casing material (15) in a state in which the electrode assembly (11) is accommodated in the accommodation space;
forming a sealing portion (151) by bonding the casing material (15) at portions other than the close contact portion (153);
wherein an extending portion (152) is formed in the sealing portion (151) at a portion adjacent to the close contact portion (153), the extending portion (152) protruding perpendicular to the close contact portion (153) by a predetermined length, and
wherein the rounded portion (15a) is spread along at least one side surface of the side surfaces of the electrode assembly (11) when one remaining accommodation space of the plurality of accommodation spaces (155a, 155b) covers the electrode assembly,
wherein the rounded portion (15a) is spread and the close contact portion (153) which is brought into close contact with the electrode assembly (11) is formed.

4. The method of claim 3, wherein a press in which a plurality of accommodation spaces (155a, 155b) and a rounded part (15a) of an upwardly convex shape formed at a gap between the accommodation spaces (155a, 155b) are formed, is used to form a shape of the casing material (15), and the casing material (15) is provided in a sheet form and pressed to the side in which the press is located.

5. The method of claim 3, wherein the casing material (15) includes aluminum or an aluminum alloy.

## Patentansprüche

1. Sekundärbatterie (10) vom Beuteltyp, umfassend:
ein Gehäusematerial (15), das konfiguriert ist, um eine Elektrodenanordnung (11) aufzunehmen, von der Elektrodenlaschen (12a, 12b) herausgeführt sind,
wobei das Gehäusematerial (15) einen Dichtungsabschnitt (151), der auf drei von vier Seiten der Sekundärbatterie (10) vom Beuteltyp ausgebildet ist, und einen Engkontaktabschnitt (153), der auf einer verbleibenden Seite der Sekundärbatterie (10) vom Beuteltyp ausgebildet ist, umfasst,
wobei der Dichtungsabschnitt (151) einen sich erstreckenden Abschnitt (152) umfasst, der senkrecht in Bezug auf den engen Kontaktabschnitt (153) an einem Abschnitt neben dem Engkontaktabschnitt (153) vorsteht,
wobei ein konkaver Abschnitt (154) in einer Längsrichtung des Engkontaktabschnitts (153) ausgebildet ist,
wobei das Gehäusematerial (15) vor dem Aufnehmen der Elektrodenanordnung (11) mit mehreren Aufnahmeräumen (155a, 155b) versehen ist, die konfiguriert sind, um die Elektrodenanordnung (11) aufzunehmen, und einem abgerundeten Abschnitt (15a), der eine nach oben konvexe Form aufweist, die sich an einem Spalt zwischen den mehreren Aufnahmeräumen (155a, 155b) befindet, wobei der konkave Abschnitt (154) mindestens ein Teil des abgerundeten Abschnitts (15a) ist,
wobei der konkave Abschnitt (154) einer Mitte des abgerundeten Abschnitts (15a) entspricht und in dem Engkontaktabschnitt (153) ausgebildet ist, während der abgerundete Abschnitt (15a), der die konvexe Form aufweist, in engen Kontakt mit einer Seitenfläche der Elektrodenanordnung (11) gebracht wird und sich entlang der einen Seitenfläche der Elektrodenanordnung (11) ausbreitet.

2. Sekundärbatterie (10) vom Beuteltyp nach Anspruch 1, wobei das Gehäusematerial (15) Aluminium oder eine Aluminiumlegierung enthält.

3. Verfahren zum Herstellen einer Sekundärbatterie (10) vom Beuteltyp nach Anspruch 1,
wobei das Verfahren umfasst:
Bereitstellen einer Elektrodenanordnung (11), die mit Elektrodenlaschen (12a, 12b) verbunden ist;
Ausbilden eines Gehäusematerials (15), auf dem ein abgerundeter Abschnitt (15a) mit einer nach oben konvexen Form an einem Spalt zwischen mehreren Aufnahmeräumen (155a, 155b), die konfiguriert sind, um die Elektrodenanordnung (11) aufzunehmen, ausgebildet ist;
Aufnehmen der Elektrodenanordnung in einem der mehreren Aufnahmeräume (155a, 155b) des Gehäusematerials (15), so dass die Elektrodenlaschen (12a, 12b) zu einer Außenseite herausgeführt sind;
Ausbilden eines Engkontaktabschnitts (153), der mit mindestens einer Seitenfläche der Seitenflächen der Elektrodenanordnung (11) in engen Kontakt gebracht wird, auf dem Gehäusematerial (15) in einem Zustand, in dem die Elektrodenanordnung (11) in dem Aufnahmeraum aufgenommen ist;
Ausbilden eines Dichtungsabschnitts (151) durch Verbinden des Gehäusematerials (15) an anderen Abschnitten als dem Engkontaktabschnitt (153);
wobei ein sich erstreckender Abschnitt (152) in dem Dichtungsabschnitt (151) an einem Abschnitt neben dem Engkontaktabschnitt (153) ausgebildet ist, wobei der sich erstreckende Abschnitt (152) um eine vorbestimmte Länge senkrecht zu dem Engkontaktabschnitt (153) vorsteht, und
wobei sich der abgerundete Abschnitt (15a) entlang mindestens einer Seitenfläche der Seitenflächen der Elektrodenanordnung (11) ausbreitet, wenn ein verbleibender Aufnahmeraum der mehreren Aufnahmeräume (155a, 155b) die Elektrodenanordnung abdeckt,
wobei sich der abgerundete Abschnitt (15a) ausbreitet und der Engkontaktabschnitt (153), der mit der Elektrodenanordnung (11) in engen Kontakt gebracht wird, ausgebildet ist.

4. Verfahren nach Anspruch 3, wobei eine Presse, in der mehrere Aufnahmeräume (155a, 155b) und ein abgerundeter Teil (15a) mit einer nach oben konvexen Form, der an einem Spalt zwischen den Aufnahmeräumen (155a, 155b) ausgebildet ist, ausgebildet sind, verwendet wird, um eine Form des Gehäusematerials (15) auszubilden, und das Gehäusematerial (15) in einer Plattenform bereitgestellt und zu der Seite, in der sich die Presse befindet, gepresst wird.

5. Verfahren nach Anspruch 3, wobei das Gehäusematerial (15) Aluminium oder eine Aluminiumlegierung enthält.

## Revendications

1. Batterie secondaire (10) de type à poche, comprenant :
un matériau de boîtier (15) configuré pour recevoir un ensemble d'électrodes (11) à partir duquel des languettes d'électrodes (12a, 12b) sont tirées,
le matériau de boîtier (15) comprenant une partie d'étanchéité (151) formée sur trois des quatre côtés de la batterie secondaire (10) de type sac, et une partie de contact étroit (153) formée sur un côté restant de la batterie secondaire (10) de type à poche,
la partie d'étanchéité (151) comprenant une partie en saillie (152) qui fait saillie perpendiculairement par rapport à la partie de contact étroit (153) au niveau d'une partie adjacente à la partie de contact étroit (153),
une partie concave (154) étant formée dans une direction longitudinale de la partie de contact étroit (153),
le matériau de boîtier (15) étant pourvu, avant de recevoir l'ensemble d'électrodes (11), de plusieurs espaces de réception (155a, 155b) configurés pour recevoir l'ensemble d'électrodes (11), et une partie arrondie (15a) ayant une forme convexe vers le haut située au niveau d'un espace entre les multiples espaces de réception (155a, 155b), la partie concave (154) étant au moins une partie de la partie arrondie (15a),
la partie concave (154) correspondant au centre de la partie arrondie (15a) et dans laquelle la partie de contact étroit (153), tandis que la partie arrondie (15a) présentant la forme convexe est amenée en contact étroit avec une surface latérale de l'ensemble d'électrodes (11) et s'étend le long de ladite surface latérale de l'ensemble d'électrodes (11).

2. Batterie secondaire (10) de type à poche selon la revendication 1, dans laquelle le matériau du boîtier (15) comprend de l'aluminium ou un alliage d'aluminium.

3. Procédé de fabrication d'une batterie secondaire (10) de type à poche selon la revendication 1, le procédé comprenant :
la fourniture d'un ensemble d'électrodes (11) relié à des languettes d'électrodes (12a, 12b) ;
la formation d'un matériau de boîtier (15) sur lequel une partie arrondie (15a) ayant une forme convexe vers le haut est formée au niveau d'un espace entre une pluralité d'espaces de réception (155a, 155b) configurés pour recevoir l'ensemble d'électrodes (11) ;
logement de l'ensemble d'électrodes dans l'un des multiples espaces de logement (155a, 155b) du matériau de boîtier (15) de telle sorte que les languettes d'électrode (12a, 12b) soient amenées vers un côté extérieur ;
former une partie de contact étroit (153) qui est mise en contact étroit avec au moins une surface latérale parmi les surfaces latérales de l'ensemble d'électrodes (11) sur le matériau de boîtier (15) dans un état dans lequel l'ensemble d'électrodes (11) est logé dans l'espace de logement ;
former une partie d'étanchéité (151) en reliant le matériau du boîtier (15) à des parties autres que la partie de contact étroit (153) ;
une partie en saillie (152) étant formée dans la partie d'étanchéité (151) au niveau d'une partie adjacente à la partie en contact étroit (153), la partie en saillie (152) faisant saillie d'une longueur prédéterminée perpendiculairement à la partie en contact étroit (153), et
la partie arrondie (15a) s'étendant le long d'au moins une surface latérale des surfaces latérales de l'ensemble d'électrodes (11) lorsqu'un espace de réception restant ( ) parmi les multiples espaces de réception (155a, 155b) recouvre l'ensemble d'électrodes,
la partie arrondie (15a) s'étendant et la partie de contact étroit (153) amenée en contact étroit avec l'ensemble d'électrodes (11) étant formée.

4. Procédé selon la revendication 3, dans lequel une presse dans laquelle plusieurs espaces de réception (155a, 155b) et une partie arrondie (15a) ayant une forme convexe vers le haut, formée au niveau d'un espace entre les espaces de réception (155a, 155b), est utilisée pour former une forme du matériau de boîtier (15), et le matériau de boîtier (15) est fourni sous forme de plaque et pressé vers le côté où se trouve la presse.

5. Procédé selon la revendication 3, dans lequel le matériau du boîtier (15) comprend de l'aluminium ou un alliage d'aluminium.
